# EUROPEAN PATENT APPLICATION

(11) **EP 2 158 827 A1**
(43) Date of publication of application: **03.03.2010**
(21) Application number: 08425572.8
(22) Date of filing: 26.08.2008
(51) Int. Cl.: A47J 19/02

(54) **Flexible citrus fruit squeezer**

(71) Applicant: Tosini, Giorgio, 24060 Credaro (BG) (IT)
(72) Inventor: Tosini, Giorgio, 24060 Credaro (BG) (IT)
(74) Representative: Garavelli, Paolo

(57) **Abstract**

A citrus fruit squeezer (1) is described, comprising: a central dome (4); a bottom (3); a side wall (2); filters or barriers (5); nozzles or weirs (6); at least the side wall (2) is made of silicone-based flexible elastic material, a rigid ring (9) connected to the external edge of the side wall (2) being adapted to contain and guiding the distortion of the squeezer when squeezing.

## Description

The present invention deals with a flexible citrus fruit squeezer that can be easily adapted to the bearing plane or vessel, or to any tool adapted to support the citrus fruit squeezer during the manual squeezing of the citrus fruit, increasing and stabilising the adherence between tool and squeezer, avoiding to pouring the squeezed citrus fruit pulp caused by sliding the bearing plane surface and by sudden jumps of the citrus fruit squeezer.

The prior art deals with increasing the adherence between kitchen tool and bearing plane as an ideal function that can be reached through:
- blocking devices like vices and pliers;
- flexible suction-type elements integral with the tool and interacting with the bearing plane surface.

The use of vices and pliers is time-consuming, complex and costly; flexible suction-type elements solve the problem of stability against an impact or sudden disturbance, but do not obstacle the tangential load to the bearing plane that occurs when squeezing.

Projections, handles and grips therefore remain integral tool parts for blocking the tool, while the citrus fruit is pressed against the corrugated dome of the citrus fruit squeezer.

The problem of stability of the citrus fruit squeezer when squeezing the citrus fruit is functionally solved with a citrus fruit squeezer of the type described in this document, whose peculiarity, which is part of an independent claim, is given by the use of flexible material, at least in the portion of citrus fruit squeezer interacting with the tools adapted to support it.

A further problem remained so far unsolved deals with the difficulty in flowing away the squeezed citrus fruit juice without clogging between the citrus fruit squeezer meanders.

The commercial distribution of citrus fruits is now guaranteed during the whole year due to the logistics of transports of goods coming from the whole world. This implies putting on the market different types of citrus fruits coming from several different parts of the world: Italy, South-Africa, Spain, Israel, South America, California are some of the areas where citrus fruits are cultivated. Obviously, the citrus fruit grown in Mediterranean climates is different from the citrus fruit grown in temperate climates. This difference is notable: in consistency of vegetable fibres; in the amount of sugars; in the viscosity of the squeezed liquid.

The variety of citrus fruits put on the market affects the shape of a citrus fruit squeezer which must facilitate downloading the squeezed liquid: this being either very viscous and rich of fibres, or very fluid and with scarce fibres. Another problem that deals with the flow of squeezed liquid through a manual citrus fruit squeezer is given by the formation of air bubbles due to the turbulent juice motion; air remained trapped in the squeezed liquid, in fact, makes even more difficult to download the liquid, creating real gaseous barriers able to clog any passage - holes with different shapes like oval, elongated, etc. or more or less arranged barriers - made on the surface of the citrus fruit squeezer.

The prior art of manual citrus fruit squeezers provides the double function of filtering/downloading the squeezed liquid to an holed bottom in which the squeezed fluid is collected. This holed section or bottom in which fluid is collected keeps slag and the variety of fibres present in the squeezed pulp of the citrus fruit and, at the same time, allows downloading the filtered liquid operating as nozzle or weir through which fluid flows away.

The double function of citrus fruit squeezer - filtering/downloading - given to a single element - the holed section or bottom - is scarcely efficient with respect to the now wide variety of types of citrus fruits to be squeezed; in fact, nowadays, a commercial demand is not satisfied about a citrus fruit squeezer capable of filtering different types of squeezed pulp without clogging the holes through which the filtered substance has then to flow out.

This problem is functionally solved with a citrus fruit squeezer of the type described in this document, of the type in which two different and separate elements respectively perform the filtering and downloading functions, filtering occurring in a fluid transit area, having replaced the fluid collection area with big nozzles whose sizes are such as not to allow any fluid stagnation and having created a sort of corrugated contour around said nozzles operating as structural support when squeezing.

Object of the present invention is providing an innovative citrus fruit squeezer partially or wholly made of silicone-based flexible material that can be extracted from a monolithic die with a simple arrangement.

A further object is providing a citrus fruit squeezer of the type that can be coupled with the container in which the squeezed citrus fruit pulp is collected, the geometric shape allowing to adapt the citrus fruit squeezer to different sizes and geometric shapes of the container that supports the lo citrus fruit squeezer itself.

A further object of the invention is providing a citrus fruit squeezer capable of keeping slag and fibres with different nature and consistence and of guaranteeing big liquid flowrates.

A further object of the invention is providing a citrus fruit squeezer equipped with big fluid-downloading holes, though not impairing its stability and structural strength when there is silicone-based flexible material.

The above and other objects and advantages of the invention, as will appear from the following description, are obtained with a flexible citrus fruit squeezer as described in claim 1. Preferred embodiments and non-trivial variations of the present invention are the subject matter of the dependent claims.

The present invention will be better described by some preferred embodiments thereof, provided as a non-limiting example, with reference to the enclosed drawings, in which:

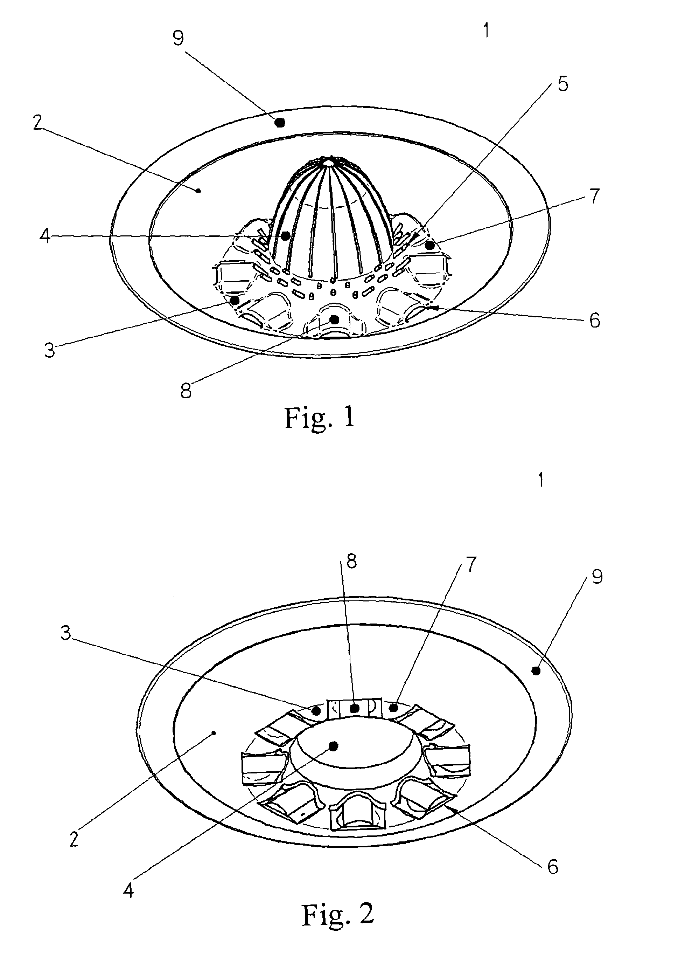

- Figure 1 is an axonometric view of the citrus fruit squeezer, intrados or internal surface;
- Figure 2 is an axonometric view of the citrus fruit squeezer, extrados or external surface;

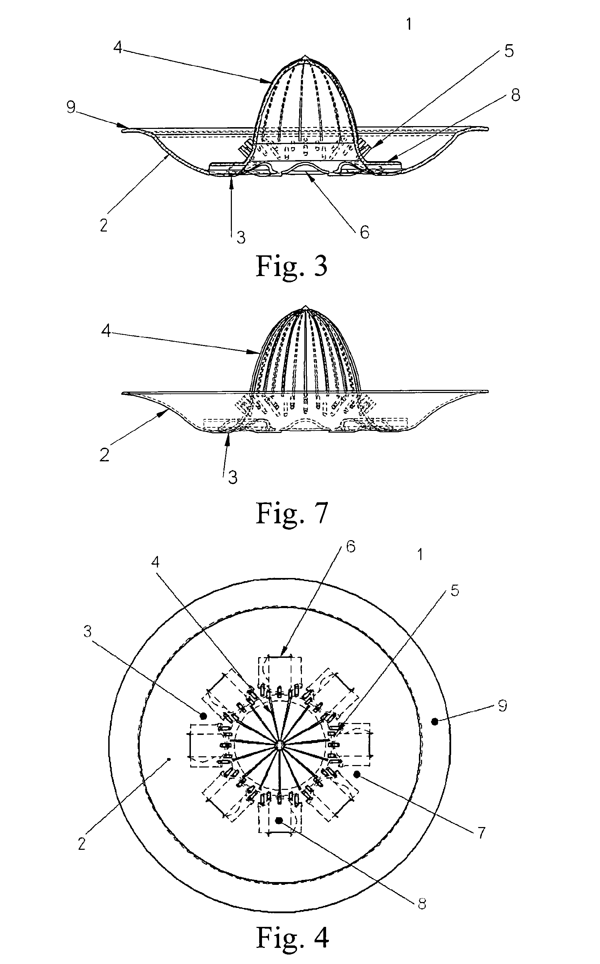

- Figure 3 is a front sectional view of the citrus fruit squeezer;
- Figure 4 is a plan view of the citrus fruit squeezer, extrados or external surface;

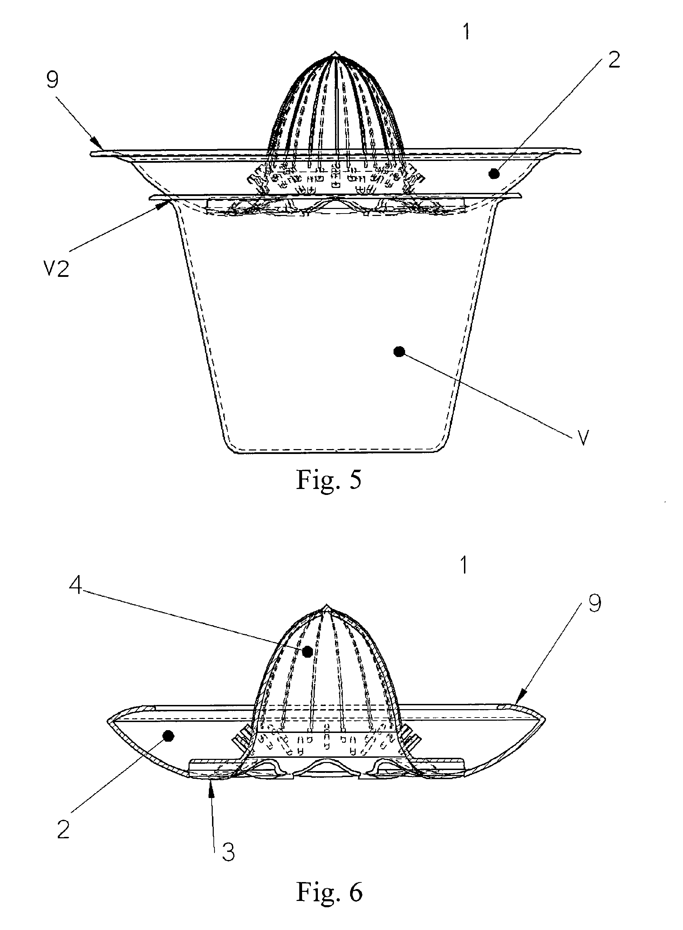

- Figure 5 is a front view of the citrus fruit squeezer abutted onto a generic vessel;
- Figure 6 is a front view of a variation of the citrus fruit squeezer; and
- Figure 7 is a front view of a citrus fruit squeezer having its containment wall with a convex shape.

A citrus fruit squeezer 1 according to the invention substantially comprises: a central dome 4 equipped with nicks or corrugated surfaces suitable to press against the citrus fruit pulp due to the effect of a mechanical work performed by an operator; a bottom 3 in which the squeezed liquid flows; a side containing wall 2; a barrier made of elements 5 for filtering or keeping slag and fibre present in the citrus fruit pulp; nozzles or weirs 6 adapted to download the squeezed liquid.

The side containing wall 2 interacts with the bearing plane or with the container V for collecting the squeezed liquid. Such side wall 2, whose shape is concave or convex, is made of silicone-based flexible elastic material. A rigid ring 9 is connected to the external edge of the side wall 2 giving a contribution for containing and guiding the distortion of the side wall 2, which, when squeezing, is squashed, adhering to the contact surface of the bearing plane or any other supporting fixture.

The side wall 2, in addition to being flexible and easily deformable, is designed according to a curvature that allows the citrus fruit squeezer to mate with a variety of vessels V equipped with edges V2 with different sizes. In this way, the problem of having to suit the citrus fruit squeezer to different vessels V used for containing the squeezed liquid and for supporting the lo citrus fruit squeezer during the squeezing phase, is solved.

A further part of the citrus fruit squeezer 1 that is made of silicone-based flexible material is given by barrier 5. In fact, such elements 5 for filtering or keeping citrus fruit slag or fibre are in this case cylindrical or conical projections arranged as a crown in an intermediate section of the central dome 4 or in the end part of the same dome 4, anyway at such a distance as not to interfere with the fingers of an operator's hand. Such cylindrical or conical projections 5, whose basic diameter can be equal to 1:2 millimetres, are made of silicone-bases flexible material resisting to impacts and above all capable of bending after the pressure of an operator's hand without injuring him.

The inclination of the intermediate section of the dome 4 prevents the squeezed pulp from stagnating and accumulating; in fact the elements 5 are placed on the slanted part, where the squeezed pulp can do nothing else than go on moving down towards the valley 3. Therefore, the filtering action of the elements 5 occurs in an area of the citrus fruit squeezer in which the pulp has still sufficient kinetic energy to avoid stagnations or whatever else next to obstacles.

At bottom 3 level, nozzles or weirs 6 are obtained through which the filtered citrus fruit pulp flows. Nozzles or weirs 6 are big-sized holes that occupy the majority of the surface composing the bottom 3. In practice, the bottom 3 loses its squeezed pulp-collecting function according to the prior art, solving the problem of clogging the holes arranged along the bottom line 3.

On the contrary, the nozzles 6 structurally weaken the bottom 3 that operates as important structural connecting node between dome 4 and side edge 2. In order to solve this, and to keep the necessary structural stability, and above all the structural strength opposing the mechanical work impressed to the citrus fruit squeezer structure when squeezing, the bottom 3 assumes a corrugated shape by means of valleys 7 alternated to peaks 8, the nozzles 6 being overlapped by the peaks 8. The corrugated shape of the bottom 3 solves the structural continuity problem, by making it a structural element resisting to the torsion action imparted when squeezing the citrus fruit pulp.

The citrus fruit squeezer 1 is preferably made of elastic deformable material, of the type known in the foods field according to directives in force. In particular, reference is made to thermoplastic material, silicone, elastomer; namely: platinum silicone, particularly suitable for freezing at -50°C and cooking at 300°C; peroxide silicone; elastomer suitable for cooking at 300°C and freezing at -50°C.

Thermoplastic material or elastomers, suitably treated in the vulcanising phase (dynamic vulcanising), capable of trapping and keeping air with the result of obtaining a lightweight and insulating structure, allow making a citrus fruit squeezer 1 with better insulating and lightweight characteristics.

Thermoplastic material or elastomers, worked in a plate and suitably preformed and assembled with glass cloth, allow making a citrus fruit squeezer 1 with very good mechanical characteristics of resistance to nicking with cutting objects.

Thermo-colouring pigments, adapted to show the temperature of the environment in which they are immersed or to show the temperature of the material with which they are in contact, are additional ingredients of the basic material.

## Claims

1. Citrus fruit squeezer (1) comprising: a central dome (4); a bottom (3); a side wall (2); filters or barriers (5); nozzles or weirs (6); **characterised in that** at least said side wall (2) is made of silicone-based flexible elastic material, a rigid ring (9) connected to the external edge of said side wall (2) being adapted to contain and guide the distortion of the squeezer when squeezing.

2. Citrus fruit squeezer (1) according to claim 1, **characterised in that** said nozzles or weirs (6) are big-sized holes that occupy the majority of the surface composing the bottom (3).

3. Citrus fruit squeezer (1) according to claim 1, **characterised in that** the bottom (3) assumes a corrugated shape formed of valleys (7) alternated by peaks (8), the nozzles (6) being overlapped by the peaks (8), said corrugated shape establishing a structural continuity between dome (4) and side edge (2).

4. Citrus fruit squeezer (1) according to claim 1, **characterised in that** said side surface (2) is a curved surface that abuts onto the edge (V2) of a container (V) along a trace or line resting onto said curved surface.

5. Citrus fruit squeezer (1) according to claim 1, **characterised in that** said filters or barriers (5) are made of silicone-based flexible elastic material and **in that** they are placed in a transit area of the squeezed fluid.

6. Citrus fruit squeezer (1) according to claim 5, **characterised in that** said filters (5) are cylindrical or conical projections arranged as a crown in an intermediate section of the central dome (4) or in the end part of the same dome (4).

7. Citrus fruit squeezer (1) according to claim 5, **characterised in that** said filters (5) are placed on a slanted wall of the citrus fruit squeezer in which the squeezed pulp has sufficient kinetic energy to avoid stagnations or the like next to obstacles.

8. Citrus fruit squeezer (1) according to any one of the previous claims, **characterised in that** it is made of thermoplastic material.

9. Citrus fruit squeezer (1) according to any one of claims 1 to 7, **characterised in that** it is made of silicone or platinum silicone or peroxide silicone.

10. Citrus fruit squeezer (1) according to any one of claims 1 to 7, **characterised in that** it is made of elastomer material.

11. Citrus fruit squeezer (1) according to any one of the previous claims, **characterised in that** it is made of an elastic material suitable for cooking at 300°C and freezing at -50°C.

12. Citrus fruit squeezer (1) according to any one of the previous claims, **characterised in that** thermo-colouring pigments, adapted to show the temperature of the environment in which they are immersed or to show the temperature of the material with which they are in contact, are additional ingredients of the basic material.

13. Citrus fruit squeezer (1) according to any one of the previous claims, **characterised in that** it is adapted to be subjected to a dynamic vulcanising treatment of the type capable of trapping and keeping air obtaining a lightweight and insulating structure.

14. Citrus fruit squeezer (1) according to any one of the previous claims, **characterised in that** it is made by joining a membrane that composes the elastic material with glass cloth, obtaining a composite structure with very good mechanical characteristics of resistance to nicking with cutting objects.
